Europäisches Patentamt

European Patent Office

Office européen des brevets

(19)

(11) Publication number: 0 323 450
A2

(12) EUROPEAN PATENT APPLICATION

(21) Application number: 89200563.8

(22) Date of filing: 12.03.86

(51) Int. Cl.⁴: B 01 D 25/12

(30) Priority: 16.04.85 US 723848

(43) Date of publication of application:
05.07.89 Bulletin 89/27

(84) Designated Contracting States:
AT BE CH DE FR GB IT LI LU NL SE

(60) Publication number of the earlier application in
accordance with Art. 76 EPC: 0 201 991

(71) Applicant: W.L. GORE & ASSOCIATES, INC.
555 Paper Mill Road P.O. Box 9329
Newark Delaware 19714-9206 (US)

(72) Inventor: Lutz, John Hess, Jr.
911 Naudain Avenue
Claymont Delaware 19714 (US)

Manniso, James Leonard
5 Woodsman Drive
Newark Delaware 19711 (US)

Rinschler, Craig Robert
4 Eagle Point Circle
Hockessin Delaware 19707 (US)

(74) Representative: Taylor, Derek George et al
Mathisen, Macara & Co. The Coach House 6-8 Swakeleys
Road
Ickenham Uxbridge UB10 8BZ (GB)

(54) A method of bonding, in particular for a filter cloth assembly.

(57) A method of bonding an adhesively incompatible elastomer to another material comprises pressing a cloth of a heat and pressure fusible material into a premoulded body of the elastomer to form a composite, fully curing the elastomer and bonding the composite to the other material at the outer surface of the cloth using an adhesive which is compatible with said other material.

FIG. 2.

EP 0 323 450 A2

## Description

## A METHOD OF BONDING, IN PARTICULAR FOR A FILTER CLOTH ASSEMBLY

This invention relates to a method for bonding an adhesively incompatible elastomer to another material in particular for bonding a cloth to another material to produce a filter cloth assembly for use on a centre-feed filter plate.

According to the invention there is provided a method for bonding an adhesively incompatible elastomer to another material comprising:

(a) pressing a cloth of an adhesively compatible material into a premoulded body of said elastomer prior to fully curing said elastomer, such that the non-fully cured elastomer penetrates into the interstices of said cloth but does not pass through said cloth,

(b) fully curing said elastomer to produce a composite of said cloth tightly bound to said elastomer, and

(c) bonding said composite to said other material at the outer surface of said cloth using an adhesive which is compatible with said cloth and said other material.

The invention will now be particularly described, by way of example, with reference to the accompanying drawings in which:-

Fig. 1 is a cross-section of a thermosetting elastomer into which a thermoplastic cloth has been pressed prior to fully curing the elastomer, and

Fig. 2 is a cross-section of the elastomer and cloth shown in Fig. 1 adhesively bonded to a filter cloth.

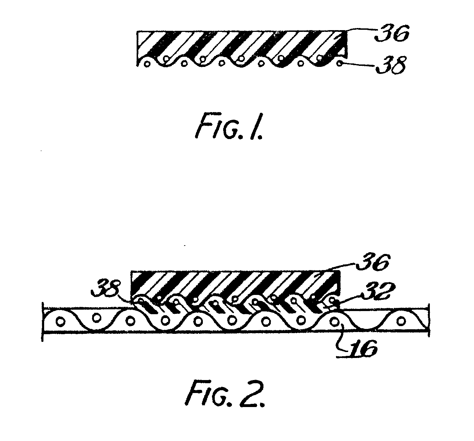

A method for bonding adhesively incompatible materials, for example, a fully cured silicone rubber coupling to a polypropylene textile felt filter cloth, is depicted in Figs. 1 and 2. Therein is shown, in Fig. 1, a premoulded elastomeric coupling 36 of silicone rubber, into which a thermoplastic cloth, woven or felt or other similar material, has been pressed prior to full curing of the elastomer 36. The pressing is done so that the elastomer penetrates into the cloth but does not penetrate all the way through the cloth 38. Upon full cure of the elastomer, the cloth 38 is mechanically tightly bound to the elastomer 36 and presents an adhesively compatible under surface of the composite coupling/cloth which can be adhesively bonded to the other materials, such as various filter cloths 16, by adhesive 32 as shown in Fig. 2. The other materials referred to can be a polymer resin, a metal, a woven cloth or a non-woven cloth. The elastomer can be, for example, a silicone elastomer or a fluoroelastomer.

The cloth 38 can be polyester or polypropylene or other similar plastics material. Textile felts or woven fabrics of polymers other than polypropylene and polyester may be used for cloth 38 where they provide equivalent properties.

A filter cloth assembly as described herein forms the subject of patent application no. 86.301798.4 (Serial No. EP 0201991) from which the present application has been divided. An alternative method of bonding forms the subject of patent application no.

## Claims

1. A method for bonding an adhesively incompatible elastomer to another material comprising:

(a) pressing a cloth of an adhesively compatible material into a premoulded body of said elastomer prior to fully curing said elastomer, such that the non-fully cured elastomer penetrates into the interstices of said cloth but does not pass through said cloth,

(b) fully curing said elastomer to produce a composite of said cloth tightly bound to said elastomer, and

(c) bonding said composite to said other material at the outer surface of said cloth using an adhesive which is compatible with said cloth and said other material.

2. A method according to claim 1 wherein said cloth is made from a polymeric resin, polyester or polypropylene, and/or is a woven or non-woven cloth.

3. A method according to claim 1 or claim 2 wherein said elastomer is a silicone elastomer, or a fluoroelastomer.

4. A method according to claim 1 or claim 2 wherein said other material is a polymeric resin, a metal, a woven cloth or a non-woven cloth.

5. A method according to any preceding claim when applied in the manufacture of a filter cloth assembly for use on a centre-feed filter plate

_36_

_38_

FIG. 1.

_36_

_38_ _32_

_16_

FIG. 2.